# FASCICULE DE BREVET EUROPEEN

(11) **EP 3 775 807 B1**
(45) Date de publication et mention de la délivrance du brevet: **09.03.2022**
(21) Numéro de dépôt: 19719562.1
(22) Date de dépôt: 29.03.2019
(51) Int. Cl.: G01J 3/02, G01J 3/50, G02F 1/13, G01N 21/00

(54) **DISPOSITIF OPTIQUE PERMETTANT DE MESURER SIMULTANÉMENT L'ÉMISSION ANGULAIRE ET SPECTRALE D'UN OBJET**
OPTISCHE VORRICHTUNG, DIE DIE GLEICHZEITIGE MESSUNG DER WINKEL- UND SPEKTRALEN EMISSION EINES OBJEKTS ERMÖGLICHT
OPTICAL DEVICE ALLOWING THE ANGULAR AND SPECTRAL EMISSION OF AN OBJECT TO BE MEASURED SIMULTANEOUSLY

(30) Priorité: 29.03.2018 FR 1852745
(43) Date de publication de la demande: 17.02.2021
(73) Titulaire: ELDIM, 14200 Herouville Saint-Clair (FR)
(72) Inventeur: LEROUX, Thierry, 14860 BAVENT (FR)
(74) Mandataire: IP Trust
(86) Numéro de dépôt international: PCT/FR2019/050742
(87) Numéro de publication internationale: WO 2019/186082

(56) Documents cités:
- WO-A1-93/21548
- CN-A- 1 796 975
- DE-A1- 19 637 131
- US-B1- 6 804 001

## Description

### Domaine technique

La présente invention concerne un dispositif de mesure permettant de mesurer simultanément la distribution angulaire et spectrale de l'émission d'un objet. Elle s'applique à des objets tels que les écrans émissifs comme les écrans à cristaux liquides, les écrans plasma, les écrans électroluminescents ou d'autres types et les dispositifs d'éclairage.

### État de la technique antérieure

On connaît déjà plusieurs techniques de mesure des caractéristiques colorimétriques de l'émission ou de la réflexion de la lumière par divers objets.

À ce sujet, on se reportera aux documents suivants :
[1] EP 0 286 529 B1,
[2] FR 2 729 220 A,
[3] FR 2 749 388 A,
[4] FR 2 800 163 A1,
[5] « Viewing angle spectral analysis of OLED display light emission properties », Pierre Boher, Thierry Leroux, Thibault. Bignon, Véronique Collomb-Patton, IDW, ISSN 1883-2490/21/0641, 641 (2014),
[6] « New multispectral Fourier optics viewing angle instrument for full characterization of LCDs and their components », Pierre Boher, Thierry Leroux, Thibault. Bignon, David Glinel, SID08, ISSN 008-0966X/08/3903, 1571 (2008).

Les techniques électromécaniques consistant à déplacer un photomètre autour de l'objet à mesurer telles que décrites dans la référence [1] sont très lentes, car effectuées par échantillonnage. Chaque direction étudiée réclame des mouvements du système mécanique et une mesure particulière. Elles sont cependant encore utilisées, car elles fournissent des mesures spectrales de bonne qualité dans les directions choisies si on remplace le photomètre par un spectrophotomètre.

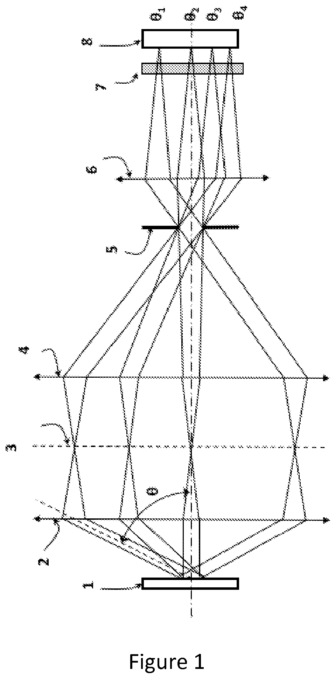

Pour la mesure de la couleur en fonction de la direction d'observation la technique consistant à utiliser une optique de Fourier associée à un capteur imageur est très utilisée. Elle est décrite dans la référence [3]. Le principe de ce système est représenté sur la Figure 1 du présent document. Elle consiste en l'utilisation d'un objectif de Fourier 2 permettant de collecter la lumière émise par une zone de l'objet 1 et à refocaliser chaque direction d'observation sur une surface focale 3. Cette surface est réimagée sur un capteur à deux dimensions 8 par l'intermédiaire de lentilles de champ 4 et d'un objectif de transfert 6. Un diaphragme 5 situé entre les lentilles de champ 4 et l'objectif de transfert 6 et optiquement conjugué de la zone de mesure sur l'objet 1 permet de définir la taille apparente de la zone mesurée indépendamment de la direction d'observation. Des filtres 7 disposés près du détecteur permettent de sélectionner la lumière analysée par le système et d'effectuer des mesures de couleurs.

La mesure de la couleur de la lumière émise sans connaître sa répartition en longueur d'onde peut présenter des inconvénients. La précision de la mesure colorimétrique est généralement meilleure si on connaît la répartition des longueurs d'onde. Dans certains cas la dépendance spectrale permet de déduire l'origine des shifts colorimétriques constatés. C'est le cas pour les écrans électroluminescents, comme expliqué dans la publication [5]. Enfin, en réflectométrie sur une surface non naturellement émissive il est nécessaire de connaître le spectre de la source lumineuse utilisée pour l'éclairage et sa modification après réflexion sur la surface.

Une possibilité de mesurer simultanément la dépendance angulaire et spectrale d'un objet émissif a déjà été mise en œuvre commercialement à l'aide d'une optique de Fourier [6]. La dépendance spectrale est mesurée par une série de filtres interférentiels de bande passante réduite positionnés successivement devant le capteur imageur à la place des filtres colorés (élément 7 de la figure 1). Cependant, le nombre de filtres est limité (31 filtres répartis sur la gamme visible 400nm - 700nm) et leur bande passante est de l'ordre de 10 nm. La résolution spectrale est donc limitée alors que la résolution nécessaire à des mesures photométriques est au moins de 4 nm. D'autre part les 31 mesures successives nécessaires pour obtenir la signature spectrale prennent un temps relativement important.

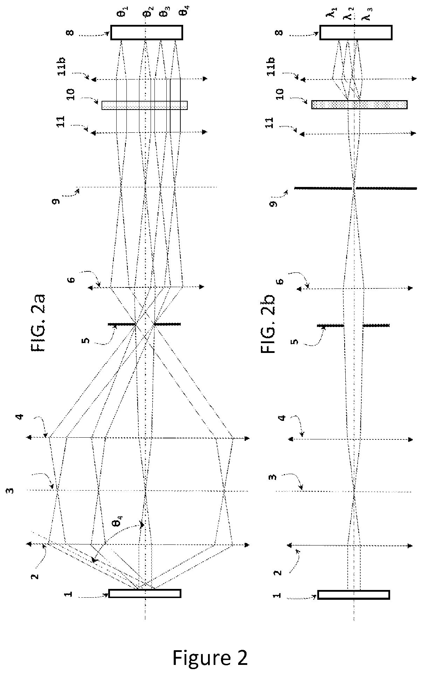

L'utilisation d'un spectromètre imageur couplé à une optique de Fourier a aussi été déposée par la demanderesse [4]. Le principe de ce système est représenté sur les figures 2.a et 2.b. Les éléments optiques sont les mêmes que pour le système de Fourier classique décrit par la référence [3] et représentés sur la Figure 1 à l'exception de la partie détection. Le capteur imageur 8 est remplacé par une fente 9 passant par l'axe optique du système et sélectionnant un azimut particulier. L'analyse spectrale s'effectue avec un spectrographe imageur composé d'un élément dispersant 10, d'optiques de transfert 11 et 11 b et d'un capteur imageur 8 situé de l'autre côté de la fente. Cette solution présente un certain nombre de désavantages. Elle est complexe à mettre en œuvre, car nécessitant des optiques additionnelles. D'autre part l'alignement du système très difficile à réaliser. Les optiques en question doivent être achromatiques ainsi que l'ensemble du système optique de Fourier situé avant la fente de sélection 9 ce qui donne des contraintes optiques importantes pour la réalisation pratique.

Un but de l'invention est notamment de remédier à tout ou partie des inconvénients précités, et en particulier de proposer dispositif présentant un minimum de composants qui permet de réaliser une mesure angulaire et spectrale le long d'un azimut particulier avec une résolution spectrale suffisante et un temps de mesure très court.

### Exposé de l'invention

Selon un premier aspect de l'invention, il est proposé un système de mesure de la répartition spatiale de l'émission spectrale d'une zone de mesure d'un objet, selon la revendication 1.

Selon l'invention, le premier objectif forme une image sur une surface de Fourier (non plane) prédéterminée sur laquelle chaque point correspond à une direction d'émission de l'objet pour une longueur d'onde particulière, et les moyens de sélections présentent une surface de sélection conformée selon la surface de Fourier prédéterminée, et les moyens de sélection sont disposés sur la surface de Fourier prédéterminée.

Aussi, les moyens de dispersion de la lumière sont situés au niveau du diaphragme.

Le diaphragme permet de définir la zone mesurée sur l'objet avec une surface apparente approximativement indépendante de la direction d'observation et garantie ainsi une collection optimale de lumière, même à des angles d'observation importants.

Avantageusement, le diaphragme peut présenter une ouverture circulaire.

L'élément dispersant la lumière peut être placé avant, après ou directement sur le diaphragme.

L'élément dispersant la lumière peut disperser la lumière le long d'une direction perpendiculaire à la direction de sélection.

Selon un mode de réalisation, les moyens de dispersion peuvent être formés par la combinaison d'un prisme, d'un réseau en transmission et d'un prisme agencé pour disperser la lumière dans une direction et ramener les rayons dispersés autour de l'axe optique du système, le diaphragme étant intégré dans ce dispositif au plus près du réseau en transmission.

Le système selon l'invention peut en outre comporter un moyen de rotation simultané des moyens de sélection et des moyens de dispersion de lumière, autour de l'axe optique du système.

Selon un deuxième aspect de l'invention, il est proposé un procédé de mesure de la répartition spatiale de l'émission spectrale d'une zone de mesure d'un objet selon la revendication 5.

### Description des figures

D'autres avantages et particularités de l'invention apparaîtront à la lecture de la description détaillée de mises en œuvre et de modes de réalisation nullement limitatifs, au regard de dessins annexés sur lesquels :
- la Figure 1 représente une illustration schématique d'un système selon l'art antérieur,
- la Figure 2 représente une illustration schématique d'un système selon l'art antérieur,
- la Figure 3 représente une illustration schématique d'un système selon l'invention,
- la Figure 4 décrit un exemple de réalisation d'une optique de Fourier d'un système selon l'invention et des moyens de sélection associés à ladite optique,
- la Figure 5 schématise l'effet du chromatisme transversal de l'optique de Fourier représentée sur la Figure 4, au niveau de la surface de Fourier.

### Description de modes de réalisation

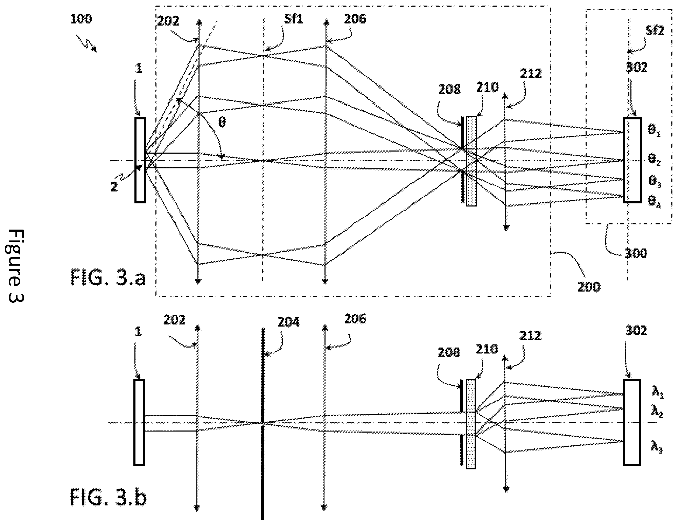

La Figure 3A représente, dans un plan d'observation d'un système selon l'invention :
- un objet 1 dont on veut mesurer la répartition spatiale de l'émission spectrale d'une zone de mesure 2,
- un système 100 selon l'invention selon le plan d'observation, déterminé par un axe optique du système 100 et une direction d'observation de la zone de mesure 102.

Le système 100 comporte :
- une partie d'imagerie 200,
- une partie de détection 300.

La partie d'imagerie comporte un premier objectif convergent 202, une fente de sélection 204, un deuxième objectif convergent 206, un diaphragme 208 et des moyens de dispersions 210 de la lumière situés au plus près du diaphragme 208 et permettant de disperser la lumière provenant d'un azimut particulier et sélectionnée par la fente de sélection 204, un troisième objectif 212.

La surface en cours d'analyse de l'objet 1 est placée dans le plan focal objet du premier objectif 202.

La zone de mesure 2 et l'objectif 202 définissent une surface Sf1, non plane, appelée surface de Fourier, qui est telle que tout faisceau issu de la zone de mesure 2 converge sur cette surface.

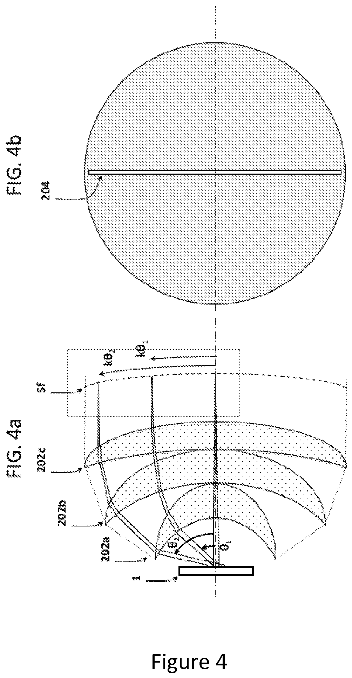

Selon l'invention, la fente de sélection 204 (mieux visible sur la Figure 4A) est conformée selon la surface Sf1 prédéterminée et disposée sur la surface Sf1.

Dans l'exemple considéré, on utilise une fente formée dans un matériau opaque, disposée sur une surface présentant un axe de révolution confondu avec l'axe optique du système. La fente permet de sélectionner un azimut particulier.

Le deuxième objectif 206 est disposé entre le premier objectif 202 et le diaphragme 208, de sorte qu'il présente un axe optique qui soit commun à celui du premier objectif 202, définissant l'axe optique du système.

Le deuxième objectif 206 est en outre disposé de sorte que l'ouverture du diaphragme 208 soit optiquement conjuguée de la zone de mesure 2 par les premier et deuxième objectifs.

La zone de mesure 102, lorsqu'elle est observée à travers le diaphragme 208, a une surface apparente indépendante de la direction d'observation.

Les moyens de dispersion 210 de lumière comportant en combinaison, un prisme, un réseau en transmission et un prisme permettant de disperser la lumière dans une direction perpendiculaire à la fente de sélection 204 et de ramener les rayons dispersés autour de l'axe optique du système.

Le diaphragme 210 est intégré dans ce dispositif au plus près du réseau en transmission.

Ces moyens de dispersions sont disposés avant l'objectif 212.

L'objectif 212 est disposé de sorte que son axe optique soit confondu avec l'axe optique du système 100, entre le diaphragme 208 et la partie de détection 300. Il est en outre disposé de sorte que la surface de Fourier SF1 soit réimagée sur un plan de Fourier secondaire SF2 par l'intermédiaire du deuxième objectif 206.

L'élément dispersant 210 et l'optique de transfert 212 font office de spectrographe imageur, qui est beaucoup plus simple que celui selon l'art antérieur.

La Figure 3B est une vue schématique du dispositif 100 de la Figure 3A, dans le plan qui est perpendiculaire à la section droite d'analyse, c'est-à-dire dans le plan de dispersion.

La partie de détection 300 comporte un capteur imageur 302 disposé sur le plan de Fourier secondaire SF2 et permettant de recevoir la lumière dispersée et de déterminer la réponse spectrale et angulaire de la lumière provenant d'un azimut particulier sélectionnée par la fente 204.

Le capteur imageur 302 est un capteur bidimensionnel (comprenant par exemple une matrice de photodétecteurs ou un dispositif CCD) et permet d'analyser, pour une position donnée des moyens de sélection, d'une part dans une direction l'intensité lumineuse en fonction de l'angle thêta et d'autre part, dans la direction perpendiculaire, l'intensité lumineuse en fonction de la longueur d'onde. On dispose avantageusement ce capteur de façon que ses axes correspondent à ces deux directions.

La Figure 4.a décrit un exemple de réalisation de l'optique de Fourier 202 incluant trois lentilles. Les faisceaux de lumière aux divers angles sont progressivement ramenés dans la direction de l'axe optique par le passage au travers des trois lentilles. La surface de Fourier Sf1 n'est pas un plan mais une surface à symétrie de révolution.

La fente 204 sélectionnant un azimut est générée sur un objet de révolution comme le montre la Figure 4.b.

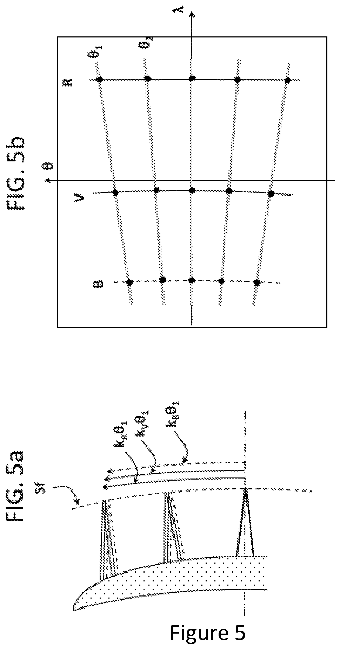

La Figure 5.a schématise l'effet du chromatisme transversal de l'optique de Fourier 202 au niveau de la surface de Fourier Sf.

Pour un faisceau de lumière donnée collecté à un angle de collection θ sur l'objet 1, chaque longueur d'onde λ est focalisée à un point plus ou moins éloigné de l'axe optique du système. La figure 5 illustre cet effet en particulier pour l'angle de collection θ₁, pour trois longueurs d'onde différentes, k_{R}θ₁, k_{V}θ₁ et k_{B}θ₁.

L'effet est généralement de plus en plus important à mesure que l'angle θ augmente.

La prise en compte de cet effet par calibration de la correspondance pixel/couple (θ, λ) sur le capteur imageur 302 peut être réalisée comme proposé sur la Figure 5.b.

Dans un mode de réalisation préféré, les lentilles de champ génèrent pour chaque direction particulière issue de la fente de sélection un faisceau quasi collimaté sur le diaphragme 208. Ceci est techniquement possible, car les contraintes de conception de ces lentilles sont moins importantes que sur le système de Fourier classique analysant l'ensemble du plan de Fourier (référence [3] et figure 1). En effet, le système de Fourier classique doit être parfaitement achromatique, une direction d'émission particulière de l'objet devant être focalisée au même point de la surface du capteur imageur, quelle que soit la longueur d'onde. Ceci est réalisé dans le système classique en corrigeant le chromatisme inévitable de l'optique de Fourier 2 par l'intermédiaire des lentilles de champ 4 et de l'optique de transfert 7.

Ce n'est pas le cas dans le dispositif de la présente invention. En effet, les contraintes de conception de l'optique de Fourier 202 sont réduites : il suffit que le chromatisme longitudinal soit minimal dans la gamme spectrale visée (typiquement la gamme visible). Il faut en effet que les diverses composantes spectrales des faisceaux de lumière collectés sur l'objet soient parfaitement focalisées sur la même surface focale Sf1 qui constitue la surface de Fourier. Le chromatisme transversal ne pose par contre pas de problème comme le montrent les figures 5a et 5b. En effet, des faisceaux de lumière issus des mêmes angles de l'objet 1 peuvent être sans inconvénient focalisés sur des points différents de la surface de Fourier. Ceci est schématisé sur la figure 5a qui reprend un détail de la figure 4a pour des faisceaux rouge (R), verts (V) et bleus (B) issus de trois angles d'incidence différents. Le positionnement des faisceaux issus du même angle d'incidence sur la surface de l'objet 1 peut être différent sans inconvénient majeur, car la dispersion spectrale ultérieure permet de séparer les contributions. Il en résulte simplement une calibration différente de la correspondance pixel / angle sur le détecteur imageur pour les diverses longueurs d'onde analysées comme le montre la figure 5b.

L'analyse spectrale peut être étendue à d'autres azimuts en ajoutant un moyen de rotation simultané de certains éléments du système. Les éléments de sélection 204 et de dispersion de la lumière 210 peuvent être montés solidaires en rotation. Il est ainsi possible de reconstruire par balayage toute la zone d'analyse. En effet si on fait tourner simultanément la fente de sélection 204 et l'élément dispersant 210 autour de l'axe optique du système il est possible de réaliser successivement une analyse spectrale temps réel de toute une série d'azimuts sous réserve d'avoir calibré correctement la dépendance pixel / angle et longueur d'onde pour chaque position des deux éléments en questions. Une analyse spectrale de toute l'ouverture angulaire de l'objet émissive peut ainsi être réalisée rapidement avec une résolution angulaire importante.

Bien sûr, l'invention n'est pas limitée aux exemples qui viennent d'être décrits et de nombreux aménagements peuvent être apportés à ces exemples sans sortir du cadre de l'invention comme défini dans les revendications.

## Revendications

1. Système (100) de mesure de la répartition spatiale de l'émission spectrale d'une zone de mesure (2) d'un objet (1), comprenant, successivement selon un axe optique du système :
- un premier objectif de Fourier (202) formant une image sur une surface de Fourier prédéterminée (SF1) sur laquelle chaque point correspond à une direction d'émission de l'objet pour une longueur d'onde particulière,
- une fente formant des moyens de sélection (204) d'une portion de l'image formée par le premier objectif correspondant à un azimut particulier de l'émission spectrale de l'objet (1), les moyens de sélections présentant une surface de sélection conformée selon la surface de Fourier prédéterminée,
- un deuxième objectif de Fourier (206) disposé après les moyens de sélection (204) coopérant avec le premier objectif de Fourier pour réaliser un plan image optiquement conjuguée de la zone de mesure.
- un diaphragme (208) situé sur ce plan conjugué de façon à ce que la zone de mesure, lorsqu'elle est observée à travers le diaphragme (208) ait une surface apparente approximativement indépendante de la direction, les premier et deuxième objectif ayant un axe optique commun formant l'axe optique du système
- et des moyens de dispersion de la lumière (210) permettant de disperser la lumière provenant des moyens de sélection,
- un troisième objectif de Fourier (212) situé après le diaphragme (208) permettant d'imager la surface de Fourier (Sf1) sur un deuxième plan de Fourier (Sf2).
- un capteur imageur (302) disposé sur ce deuxième plan de Fourier Sf2 permettant de recevoir la lumière dispersée et de déterminer la réponse spectrale et angulaire de la lumière provenant d'un azimut particulier sélectionnée par les moyens de sélection (204),
**caractérisé en ce que** :
- les moyens de sélection (204) sont disposés sur la surface de Fourier (Sf1) prédéterminée de façon à sélectionner à un azimut particulier de l'émission spectrale de l'objet, et
- les moyens de dispersion de la lumière (210) sont situés au niveau du diaphragme (208).

2. Système selon la revendication précédente, dans lequel le diaphragme (208) présente une ouverture circulaire.

3. Système selon l'une quelconque des revendications précédentes, dans lequel les moyens de dispersion sont formés par la combinaison d'un prisme, d'un réseau en transmission et d'un prisme agencé pour disperser la lumière dans une direction et ramener les rayons dispersés autour de l'axe optique du système, le diaphragme étant intégré dans ce dispositif au plus près du réseau en transmission.

4. Système selon l'une quelconque des revendications précédentes, comportant un moyen de rotation simultané des moyens de sélection (204) et des moyens de dispersion de lumière (210), autour de l'axe optique du système.

5. Procédé de mesure de la répartition spatiale de l'émission spectrale d'une zone de mesure (2) d'un objet (1) par un système (100), ledit procédé comportant une utilisation d'un système de mesure selon l'une quelconque des revendications précédentes.

## Patentansprüche

1. System (100) zur Messung der räumlichen Verteilung der spektralen Emission eines Messbereichs (2) eines Objekts (1), umfassend, nacheinander entlang einer optischen Achse des Systems:
- ein erstes Fourier-Objektiv (202), das ein Bild auf einer vorbestimmten Fourier-Oberfläche (SF1) bildet, auf der jeder Punkt einer Emissionsrichtung des Objekts für eine bestimmte Wellenlänge entspricht,
- einen Spalt, der Auswahlmittel (204) eines Teils des durch das erste Objektiv gebildeten Bildes bildet, der einem bestimmten Azimut der spektralen Emission des Objekts (1) entspricht, wobei die Auswahlmittel eine Auswahloberfläche aufweisen, die gemäß der vorbestimmten Fourier-Oberfläche geformt ist,
- ein zweites Fourier-Objektiv (206), das hinter den Auswahlmitteln (204) angeordnet ist und mit dem ersten Fourier-Objektiv zusammenwirkt, um eine optisch konjugierte Bildebene des Messbereichs zu erstellen.
- eine Blende (208), die sich auf dieser konjugierten Ebene befindet, derart, dass der Messbereich, wenn er durch die Blende (208) betrachtet wird, eine sichtbare Oberfläche aufweist, die annähernd richtungsunabhängig ist, wobei das erste und das zweite Objektiv eine gemeinsame optische Achse aufweisen, die die optische Achse des Systems bildet
- und Lichtstreuungsmittel (210) zum Streuen des Lichts aus den Auswahlmitteln,
- ein drittes Fourier-Objektiv (212), das sich hinter der Blende (208) befindet, um die Fourier-Oberfläche (Sf1) auf eine zweite Fourier-Ebene (Sf2) abzubilden,
- einen Bildsensor (302), der auf dieser zweiten Fourier-Ebene Sf2 angeordnet ist, um das gestreute Licht zu empfangen und die Spektral- und Winkelantwort des Lichts aus einem bestimmten Azimut zu bestimmen, das von den Auswahlmitteln (204) ausgewählt wurde,
**dadurch gekennzeichnet, dass**:
- die Auswahlmittel (204) auf der vorbestimmten Fourier-Oberfläche (Sf1) derart angeordnet sind, dass sie ein bestimmtes Azimut der spektralen Emission des Objekts auswählen, und
- und sich die Lichtstreuungsmittel (210) an der Blende (208) befinden.

2. System nach dem vorhergehenden Anspruch, bei dem die Blende (208) eine kreisförmige Öffnung aufweist.

3. System nach einem der vorhergehenden Ansprüche, bei dem die Streuungsmittel durch eine Kombination aus einem Prisma, einem Übertragungsnetz und einem Prisma gebildet werden, das so angeordnet ist, dass es das Licht in eine Richtung streut und die gestreuten Strahlen um die optische Achse des Systems herum zurückführt, wobei die Blende in dieser Vorrichtung so nah wie möglich am Übertragungsnetz integriert ist.

4. System nach einem der vorhergehenden Ansprüche, das ein Mittel zur gleichzeitigen Drehung der Auswahlmittel (204) und der Lichtstreuungsmittel (210) um die optische Achse des Systems herum umfasst.

5. Verfahren zum Messen der räumlichen Verteilung der spektralen Emission eines Messbereichs (2) eines Objekts (1) durch ein System (100), wobei das Verfahren die Verwendung eines Messsystems nach einem der vorhergehenden Ansprüche umfasst.

## Claims

1. System (100) for measuring the spatial distribution of the spectral emission of a measurement zone (2) of an object (1), comprising, successively along an optical axis of the system:
- a first Fourier lens (202) forming an image on a predetermined Fourier surface (SF1) on which each point corresponds to an emission direction of the object for a particular wavelength,
- a slit which forms means (204) for selecting a portion of the image formed by the first lens corresponding to a particular azimuth of the spectral emission of the object (1), the selection means having a selection surface shaped according to the predetermined Fourier surface,
- a second Fourier lens (206) which is arranged after the selection means (204) and cooperates with the first Fourier lens to produce an optically conjugate image plane of the measurement zone,
- a diaphragm (208) located on this conjugate plane such that the measurement zone, when viewed through the diaphragm (208), has an apparent surface approximately independent of the direction, the first and second lenses having a common optical axis forming the optical axis of the system,
- and light scattering means (210) which make it possible to scatter light from the selection means,
- a third Fourier lens (212) which is located after the diaphragm (208) and makes it possible to image the Fourier surface (Sf1) on a second Fourier plane (Sf2),
- an imaging sensor (302) which is arranged on this second Fourier plane Sf2 and makes it possible to receive the scattered light and to determine the spectral and angular response of the light coming from a particular azimuth selected by the selection means (204),
**characterized in that**:
- the selection means (204) are arranged on the predetermined Fourier surface (Sf1) so as to select a particular azimuth of the spectral emission of the object,
and
- the light scattering means (210) are located at the diaphragm (208).

2. System according to the preceding claim, wherein the diaphragm (208) has a circular opening.

3. System according to either of the preceding claims, wherein the scattering means are formed by the combination of a prism, a transmission network and a prism arranged to scatter the light in one direction and return the scattered rays about the optical axis of the system, the diaphragm being integrated into this device as close as possible to the transmission network.

4. System according to any of the preceding claims, comprising means for simultaneously rotating the selection means (204) and the light scattering means (210) about the optical axis of the system.

5. Method for measuring the spatial distribution of the spectral emission of a measurement zone (2) of an object (1) by a system (100), said method comprising the use of a measurement system according to any of the preceding claims.
